# EUROPÄISCHE PATENTSCHRIFT

(11) **EP 4 223 942 B1**
(45) Veröffentlichungstag und Bekanntmachung des Hinweises auf die Patenterteilung: **06.05.2026**
(21) Anmeldenummer: 22209819.6
(22) Anmeldetag: 28.11.2022
(51) Int. Cl.: E02F 9/08, B60K 15/063, B60K 15/067, B60K 15/03

(54) **ARBEITSMASCHINE**
A WORKING MACHINE
MACHINE DE TRAVAIL

(30) Priorität: 03.02.2022 DE 202022010063 U
(43) Veröffentlichungstag der Anmeldung: 09.08.2023
(73) Patentinhaber: Liebherr-Werk Bischofshofen GmbH, 5500 Bischofshofen (AT)
(72) Erfinder: DENGG, Reinhard, 5580 Tamsweg (AT); HEUGENHAUSER, Gerald, 5622 Goldegg (AT); KNAPP, Hans, 5500 Bischofshofen (AT)
(74) Vertreter: Lorenz Seidler Gossel Part. mbB

(56) Entgegenhaltungen:
- EP-A1- 4 026 723
- WO-A1-2021/075970
- WO-A1-2022/022855
- WO-A1-2022/111795
- US-A1- 2016 226 086

## Beschreibung

Die vorliegende Erfindung betrifft eine Arbeitsmaschine, insbesondere einen Radlader, mit einer Kabine für den Führer der Arbeitsmaschine sowie mit einem hinter der Kabine angeordneten Maschinenraum.

Aus dem Stand der Technik ist es bekannt, Radlader mit einer Kabine für den Führer der Arbeitsmaschine und mit einem Maschinenraum auszuführen, wobei sich in dem Maschinenraum ein Dieselmotor befindet, der zum Vortrieb der Arbeitsmaschine dient.

Im Zuge der Decarbonisierung stellt sich auch im Bereich von Arbeitsmaschinen die Frage nach alternativen Energieträgern, wie beispielsweise Wasserstoff. Dessen Einsatz hat sich weder bei Personen- noch bei Nutzfahrzeugen durchgesetzt.

Das Patentdokument US 2016/226086 A1 stellt einen relevanten Stand der Technik dar.

Der vorliegenden Erfindung liegt die Aufgabe zugrunde, eine Arbeitsmaschine der eingangs genannten Art dahingehend weiterzubilden, dass diese für den Einsatz alternativer Energieträger, insbesondere von Wasserstoff, besonders geeignet ist.

Diese Aufgabe wird durch eine Arbeitsmaschine mit den Merkmalen des Anspruchs 1 gelöst. Danach ist vorgesehen, dass die Arbeitsmaschine über einen Antrieb verfügt, der unmittelbar oder mittelbar mit Wasserstoff betreibbar ist und dass ein oder mehrere Tanks zur Aufnahme von Wasserstoff vorhanden ist, wobei der oder die Tanks zwischen der Kabine und dem Heck der Arbeitsmaschine in einem Wasserstoff-Kraftstoffsystem angeordnet sind. Dieser Antrieb ist oder umfasst vorzugweise einen Antrieb, der zum Vortrieb der Arbeitsmaschine dient, d.h. einen Fahrantrieb.

Diese Anordnung des oder der Wasserstofftanks im Wasserstoff-Kraftstoffsystem erlaubt die bestmögliche Ausnutzung des Bauraums unter vollständiger oder weitgehender Beibehaltung der Fahrzeugaußenabmessungen eines Radladers oder einer sonstigen Arbeitsmaschine mit Dieselmotor.

Weitere Vorteile bestehen darin, dass ein vergleichsweise niedriger Schwerpunkt erzielt wird, dass eine Positionierung möglichst im Zentrum der Arbeitsmaschine möglich ist bzw. vorliegt, um die Gefahr des Anfahrens zu verringern und dass eine räumliche Trennung des oder der Tanks von heißen und zündfähigen Umgebungsbedingungen im Maschinenraum erfolgt.

Ein weiterer Vorteil dieser Anordnung besteht in der guten Zugänglichkeit des Wasserstoff-Kraftstoffsystems für Wartungs- und/oder Reparaturarbeiten sowie in der Möglichkeit, dieses hinreichend vor Beschädigungen zu schützen.

Der oder die Tanks sind vorzugsweise Bestsandteil eines Tanksystems, das außer den Tanks Rohrleitungen und/oder Ventile etc. zur Führung und Steuerung des Wasserstoffs umfasst.

An sich ist die Anordnung des Wasserstoff-Kraftstoffsystems hinter der Kabine unter Umständen insofern nachteilig, als dass das Sichtfeld des Maschinenführers nach hinten eingeschränkt werden kann. Dieses Problem kann einerseits durch die Verwendung von Kameras und/oder Sensoren zur Erfassung des vom Maschinenführer nicht einsehbaren Bereichs behoben werden.

Vorzugsweise befindet sich der oder die Tanks in einem Bereich zwischen der Kabine und dem heckseitigen Maschinenraum der Arbeitsmaschine. Diese Anordnung ist einerseits für die Konzentrierung des Schwerpunktes im Zentrum der Arbeitsmaschine vorteilhaft und andererseits insofern vorteilhaft, als dass im Falle einer Wasserstoffleckage hohe Sicherheitsmaßstäbe erfüllt werden, da sich in bevorzugter Ausgestaltung der Erfindung oberhalb des Tanksystems keine Komponenten befinden, die zur Entzündung des Luft-Wasserstoffgemisches führen könnten.

Dies erlaubt eine verhältnismäßig große Menge an Wasserstoff am Gerät mitzuführen und dennoch die geltenden Richtlinien und Normen hinsichtlich Tankeinbau und Sicherheit des Wasserstofftanksystems uneingeschränkt zu erfüllen. Darüber hinaus können die Behälter übersichtlich und servicefreundlich an einem Einbauort konzentriert angeordnet werden.

Die Art der Speicherung von Wasserstoff ist beliebig. Der Tank kann beispielsweise geeignet sein, Wasserstoff in flüssiger und/oder gasförmiger Form und/oder in gebundener Form zu speichern.

Das Wasserstoff-Kraftstoffsystem ist bereits durch seine erhöhte Position auf dem Maschinenraum bzw. auf dessen Abdeckung geschützt. Besonders vorteilhaft ist es, wenn zudem eine Verkleidung vorhanden ist, die das Wasserstoff-Kraftstoffsystem vollständig oder teilweise umgibt.

Bevorzugt ist es, wenn sich oberhalb des Wasserstoff-Kraftstoffsystems kein anderer Bestandteil der Arbeitsmaschine befindet. Dies hat den erheblichen Vorteil, dass Wasserstoff im Falle einer Leckage ungehindert nach oben entweichen kann und nicht mit einer Komponente der Arbeitsmaschine in Kontakt kommt. Die Wahrscheinlichkeit für die Entzündung von entweichendem Wasserstoff durch eine ggf. heiße Maschinenkomponente ist dadurch minimiert.

Die Umsetzung der hiermit beschriebenen Tankanordnung ermöglicht es, eine verhältnismäßig große Menge an Wasserstoff am Gerät mitzuführen und gerade mit dieser Tankanordnung können die relevanten Richtlinien und Normen hinsichtlich Tankeinbau und Sicherheit des Wasserstoffsystems eingehalten werden. Erst damit kann eine möglichst lange Einsatzzeit der Arbeitsmaschine auch ohne Zwischentanken garantiert werden.

Der Begriff eines "Antriebes, der mit Wasserstoff betreibbar ist" ist nicht einschränkend dahingehend zu verstehen, dass ein Wasserstoffverbrennungsmotor gemeint ist, wenngleich auch dieser von der Erfindung umfasst ist. Denkbar ist es beispielsweise, dass die Arbeitsmaschine über eine Brennstoffzelle zur Erzeugung von elektrischer Energie mittels Wasserstoff und/oder über einen Wasserstoffverbrennungsmotor verfügt, dass der Antrieb also mittelbar mittels Wasserstoff betrieben wird.

Vorzugsweise wird der Vortrieb der Arbeitsmaschine durch Wasserstoff ermöglicht. Denkbar ist ein Antrieb umfassend ein Brennstoffzellensystem und einen elektrifizierten Antriebsstrang, vorzugsweise als Ersatz für den in bekannten Arbeitsmaschinen verwendeten Dieselmotor.

Denkbar ist es, dass die Arbeitsmaschine keinen Verbrennungsmotor für Dieselkraftstoff oder Benzin als Fahrantrieb der Arbeitsmaschine aufweist.

Von der Erfindung ist auch der Fall umfasst, dass die Arbeitsmaschine einen Verbrennungsmotor für Dieselkraftstoff oder Benzin als Fahrantrieb der Arbeitsmaschine aufweist und zusätzlich einen mit Wasserstoff betreibbaren Antrieb als Fahrantrieb der Arbeitsmaschine aufweist (Dual Fuel System).

Zum Zwecke der Wartung und/oder des Austausches kann vorgesehen sein, dass die Bestandteile des Wasserstoff-Kraftstoffsystems nicht fest mit der Arbeitsmaschine in Verbindung stehen, sondern austauschbar sind.

Vorzugsweise ist das Wasserstoff-Kraftstoffsystem bzw. ggf. dessen Verkleidung so dimensioniert, dass dieses nicht seitlich und/oder nach hinten und/oder nach vorne über den Maschinenraum übersteht.

Die Anzahl, Anordnung und Form der Tanks ist beliebig. Denkbar ist die Verwendung länglicher Tanks, die längs oder quer zur Fahrtrichtung der Arbeitsmaschine angeordnet sind.

Hinsichtlich der Anzahl und Positionierung der Tanks, wie z.B. längs und/oder quer zur Fahrtrichtung, stehend oder liegend, sind alle Ausführungen von der Erfindung umfasst.

Vorzugsweise befindet sich die Tankanordnung nicht über dem Maschinenraum, sondern in Fahrtrichtung vor diesem.

Vorzugsweise ist das Tanksystem von einer massiven Verkleidung umgeben, um die Behälter vor mechanischen Einflüssen beispielsweise während eines Unfalles zu schützen.

In einer weiteren Ausgestaltung der Erfindung ist eine schützende Verkleidung, z.B. aus massivem Stahlblech, vorgesehen, welche im Fall des Überrollens das Eindrücken der Kabine (zum Teil) verhindert und das Einklemmen des Fahrers in der Kabine verhindert

Denkbar ist es, dass sich das Tanksystem im Falle eines schwerwiegenden Unfalles an einer vordefinierten Sollbruchstelle vollständig oder teilweise vom Fahrzeugrahmen trennen kann.

Erfindungsgemäß ist ein Befestigungsrahmen vorhanden, der den oder die Wasserstoffbehälter und/oder die Ventiltechnik teilweise oder vollständig umgibt, wobei sich der Befestigungsrahmen bei einem Unfall verformen kann und so einen Teil der auftretenden Energie aufnehmen kann.

Weiterhin können eine oder mehrere Sicherheitsmaßnahmen, z.B. im Form eines Detektions- und Steuermechanismus vorgesehen sein, die beispielsweise im Falle einer oder mehrerer beschädigter Wasserstoffleitungen einen unkontrollierten Wasserstoffaustritt sicherstellen. Dabei kann es sich beispielsweise um Ventile handeln, die schließen, wenn der Austritt von Wasserstoff detektiert wird. Vorzugsweise erfolgt das Schließen bzw. die Einleitung der Sicherheitsmaßnahmen automatisiert, d.h. ohne Zutun des Maschinenführers. Somit kann ein Sicherheitskonzept realisiert sein, das im Falle eines unkontrollierten Wasserstoffaustrittes durch eine oder mehrere beschädigte Komponenten sicherstellt, dass die Tankventile geschlossen werden.

Weiterhin kann die Arbeitsmaschine einen heckseitigen Aufstieg an einer oder beiden Fahrzeugseiten oder am Heck für Service- bzw. Wartungsarbeiten oder als Zugang bzw. Aufstieg zu der Kabine aufweisen.

Das Wasserstoff-Kraftstoffsystem (im Rahmen der Erfindung auch als "Tanksystem" bezeichnet) kann eine oder mehrere der Komponenten:
- Tank zur Aufnahme von Wasserstoff bzw. enthaltend Wasserstoff,
- Ventil,
- Verrohrung
umfassen oder aus diesen bestehen. Die genannte Verrohrung dient beispielsweise zur Verbindung des oder Tanks mit einem oder mehreren Ventilen und/oder zur Anbindung einer zu dem Antrieb führenden Versorgungsleitung und/oder zur Verbindung von Tanks untereinander etc.

Die vorliegende Erfindung umfasst sowohl eine Arbeitsmaschine, deren Tanks teilweise oder vollständig mit Wasserstoff gefüllt sind, als auch eine Arbeitsmaschine mit Tanks, die nicht mit Wasserstoff gefüllt sind.

In einer weiteren Ausgestaltung der Erfindung ist vorgesehen, dass die Arbeitsmaschine einen Grundrahmen aufweist und dass der Tank oder ein diesen umfassendes Tanksystem derart ausgebildet und angeordnet ist, dass insbesondere bei einem Unfall ein Teil der auftretenden Kräfte über den oder die Tanks und/oder über ein den oder die Tanks umfassendes Tanksystem auf den Grundrahmen abgeleitet wird. Im Falle des Umkippens oder eines Überschlages des Fahrzeuges treten enorme Kräfte auf. Damit das Tanksystem diesen standhält, ohne dass sicherheitstechnisch relevante Komponenten beschädigt werden, ist üblicherweise eine sehr massive Trägerkonstruktion erforderlich. Dieses erhöht jedoch das Fahrzeuggewicht wesentlich und hat aufgrund des höheren Schwerpunktes negative Auswirkungen auf die Fahreigenschaften der Maschine. In der hier beschriebenen optionalen Ausführung kann dieses Problem gelöst werden, indem die mechanische Festigkeit des oder Tanks bzw. des Tanksystems genutzt wird und dadurch zumindest ein Teil der auftretenden Kräfte über die Struktur des oder der Tanks bzw. des oder der Tanksysteme auf das tragende Grundgerüst des Fahrzeuges abgeleitet wird.

Es ist bevorzugt, dass die Tanks, sofern diese aus Verbundwerkstoffen (Bsp. Kohlefaser-Verbundwerkstoffe bzw. Glasfaser-Verbundwerkstoffe) bestehen, im alltäglichen Betrieb derart in deren Rahmen befestigt sind, dass nur äußerst geringe Kräfte auf die Tankstruktur einwirken. Wären die Tanks starr in deren Rahmen befestigt, hätte dies in Verbindung mit der Ausdehnung während des Befüllvorgangs unter Umständen schwerwiegende Beschädigungen und somit einen unbedingt notwendigen Austausch der Tanks zur Folge.

In einer weiteren bevorzugten Ausgestaltung der Erfindung ist vorgesehen, dass Komponenten mit geringer mechanischer Festigkeit und/oder sicherheitstechnisch hoch sensible Komponenten, wie z.B. Tankventile, von einer vor mechanischen Einflüssen schützenden Struktur umgeben sind. Diese schützende Struktur ist vorzugsweise deutlich kleiner und leichter als ein Schutzpanzer, welcher das komplette Tanksystem umgibt.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert.

Es zeigen:
- Figur 1:: eine schematische Draufsicht auf den Radlader,
- Figur 2:: eine schematische Seitenansicht eines Radladers von links und
- Figur 3:: eine schematische Seitenansicht eines Radladers von links mit heckseitigem Aufstieg.

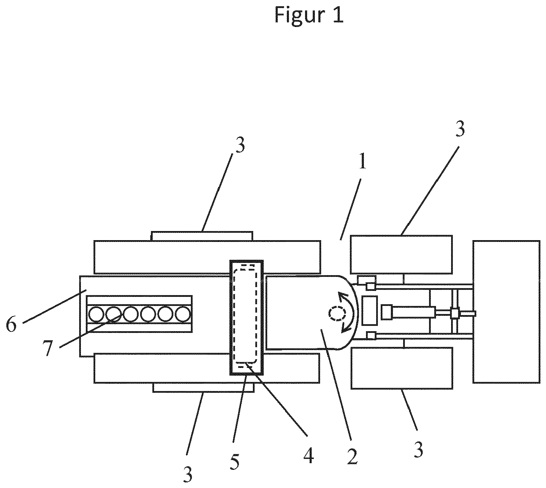

Figur 1 zeigt eine Draufsicht auf den Radlader 1 gemäß der Erfindung. Der Radlader 1 weist einen Vorderwagen und einen Hinterwagen auf, die durch ein Knickgelenk miteinander verbunden sind. Der Doppelpfeil um das gestrichelt dargestellte Knickgelenk verdeutlicht die Bewegbarkeit von Vorder- und Hinterwagen relativ zueinander.

Mit 2 ist die Kabine für den Führer des Radladers gekennzeichnet. Die Kabine ist an dem Hinterwagen angeordnet. Unmittelbar hinter der Kabine 2 befindet sich ein quer zur Fahrtrichtung angeordneter Tank 4, der von einer ebenfalls quer zur Fahrtrichtung angeordneten schützenden Struktur und von einem Montagerahmen 5 vorzugsweise allseitig umgeben ist.

In dem dargestellten Ausführungsbeispiel erstreckt der Tank 4 und der Montagerahmen 5 beidseitig über die Kabine 2 hinaus.

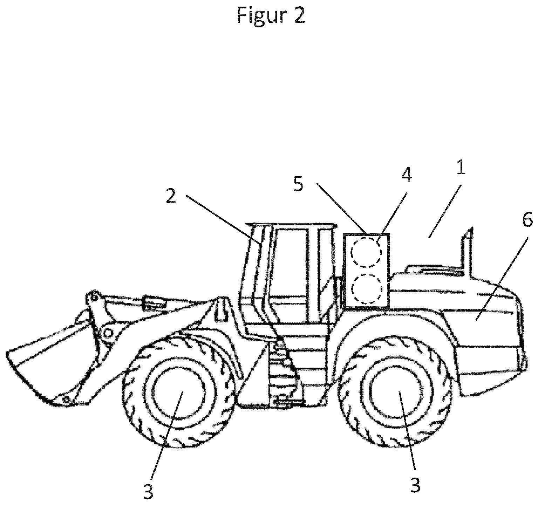

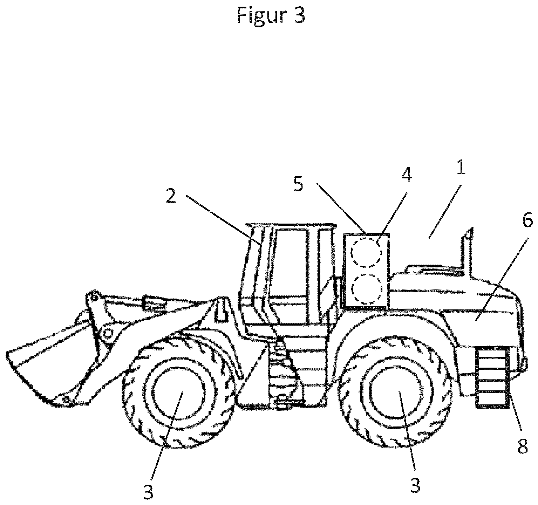

Wie dies aus den Seitenansichten der Figuren 2 und 3 hervorgeht, erstreckt sich das Tanksystem im Wesentlichen bis zum Kabinendach. Es kann einen, zwei oder mehr als zwei übereinander und/oder nebeneinander angeordnete Tanks aufweisen.

Im Hinterwagen des Radladers befindet sich der Maschinenraum 6, der u.a. die Antriebstechnik des Radladers zum Antrieb der Räder 3 des Radladers 1 aufweist. Bei dem Antrieb kann es sich beispielsweise um einen Wasserstoffverbrennungsmotor handeln oder auch um eine Brennstoffzelle, die einen Elektromotor mit elektrischer Energie versorgt.

Mit dem Bezugszeichen 8 ist der Wartungs- und Servicezugang zu dem Maschinenraum 6 gekennzeichnet, der wie aus Figur 3 ersichtlich vorzugsweise als Leiter bzw. Stiege ausgebildet ist.

Figur 2 zeigt den Radlader gemäß Figur 1 in einer Seitenansicht von links und Figur 3 zeigt den Radlader gemäß Figur 1 in einer Seitenansicht von links mit optionalem, heckseitigen Zugang.

Aus beiden Figuren ist ersichtlich, dass sich der Tank bzw. die Tankanordnung unmittelbar hinter der Kabine 2 befindet. Zwischen der Kabine 2 und dem Maschinenraum 6 befindet sich eine Vertiefung, in der die Tankanordnung angeordnet ist.

## Patentansprüche

1. Arbeitsmaschine, insbesondere Radlader, mit einer Kabine (2) für den Führer der Arbeitsmaschine sowie mit einem hinter der Kabine (2) angeordneten Maschinenraum (6), wobei die Arbeitsmaschine über einen Antrieb verfügt, der mit Wasserstoff oder mit aus Wasserstoff gewonnener Energie betreibbar ist und dass ein oder mehrere Tanks (4) zur Aufnahme von Wasserstoff vorhanden sind, wobei der oder die Tanks (4) zwischen der Kabine (2) und dem Heck der Arbeitsmaschine in einem Wasserstoff-Kraftstoffsystem angeordnet sind, **dadurch gekennzeichnet, dass** ein den oder die Behälter umfassendes Tanksystem einen Befestigungsrahmen aufweist, der ausgebildet ist, sich bei einer Krafteinwirkung, insbesondere bei einem Unfall zu verformen.

2. Arbeitsmaschine nach Anspruch 1, **dadurch gekennzeichnet, dass** der Tank (4) unmittelbar hinter der Kabine (2) angeordnet ist.

3. Arbeitsmaschine nach Anspruch 1 oder 2, **dadurch gekennzeichnet, dass** der Tank (4) nicht oberhalb des Maschinenraums (6) angeordnet ist.

4. Arbeitsmaschine nach einem der vorhergehenden Ansprüche, **dadurch gekennzeichnet, dass** der Tank (4) zwischen der Kabine (2) und dem Maschinenraum (6) angeordnet ist und/oder dass hinter der Kabine (2) eine Vertiefung angeordnet ist, in der sich der Tank (4) befindet.

5. Arbeitsmaschine nach einem der vorhergehenden Ansprüche, **dadurch gekennzeichnet, dass** das Wasserstoff-Kraftstoffsystem geeignet ist, Wasserstoff in flüssiger und/oder gasförmiger Form und/oder in gebundener Form zu speichern und/oder dass eine vor mechanischen Einflüssen schützende Struktur vorhanden ist, welche das Wasserstoff-Kraftstoffsystem zumindest teilweise umgibt.

6. Arbeitsmaschine nach einem der vorhergehenden Ansprüche, **dadurch gekennzeichnet, dass** eine Verkleidung vorhanden ist, welche das Wasserstoff-Kraftstoffsystem zumindest teilweise umgibt und/oder dass sich oberhalb des Wasserstoff-Kraftstoffsystems kein anderer Bestandteil der Arbeitsmaschine befindet, welcher eine Zündquelle darstellen kann.

7. Arbeitsmaschine nach einem der vorhergehenden Ansprüche, **dadurch gekennzeichnet, dass** die Arbeitsmaschine über eine Brennstoffzelle zur Erzeugung von elektrischer Energie mittels Wasserstoff und/oder über einen Wasserstoffverbrennungsmotor verfügt.

8. Arbeitsmaschine nach einem der vorhergehenden Ansprüche, **dadurch gekennzeichnet, dass** die Arbeitsmaschine keinen Verbrennungsmotor für Dieselkraftstoff oder Benzin zum Antrieb der Arbeitsmaschine aufweist oder dass die Arbeitsmaschine außer dem mit Wasserstoff betreibbaren Antrieb über einen Verbrennungsmotor für Dieselkraftstoff oder Benzin zum Antrieb der Arbeitsmaschine verfügt.

9. Arbeitsmaschine nach einem der vorhergehenden Ansprüche, **dadurch gekennzeichnet, dass** die Bestandteile des Wasserstoff-Kraftstoffsystems nicht fest mit der Arbeitsmaschine in Verbindung stehen, sondern austauschbar sind.

10. Arbeitsmaschine nach einem der vorhergehenden Ansprüche, **dadurch gekennzeichnet, dass** das Wasserstoff-Kraftstoffsystem zumindest teilweise eine Vormontagebaugruppe bildet und/oder dass das Wasserstoff-Kraftstoffsystem eine oder mehrere der Komponenten Tank (4) zur Aufnahme von Wasserstoff bzw. enthaltend Wasserstoff, Ventil, Verrohrung umfasst oder aus diesen besteht.

11. Arbeitsmaschine nach einem der vorhergehenden Ansprüche, **dadurch gekennzeichnet, dass** eine Sollbruchstelle vorhanden ist, die ausgebildet und angeordnet ist, so dass sich der Tank (4) und/oder ein den oder die Behälter umfassendes Tanksystem bei Krafteinwirkung, insbesondere bei einem Unfall, an der Sollbruchstelle von der Arbeitsmaschine und insbesondere von deren Fahrzeugrahmen löst oder sich relativ dazu bewegt.

12. Arbeitsmaschine nach einem der vorhergehenden Ansprüche, **dadurch gekennzeichnet, dass** die Arbeitsmaschine einen heckseitigen Aufstieg aufweist.

13. Arbeitsmaschine nach einem der vorhergehenden Ansprüche, **dadurch gekennzeichnet, dass** die Arbeitsmaschine einen Grundrahmen aufweist und dass insbesondere bei einem Unfall ein Teil der auftretenden Kräfte über den oder die Tanks und/oder über ein den oder die Tanks umfassendes Tanksystem auf den Grundrahmen abgeleitet wird.

14. Arbeitsmaschine nach einem der vorhergehenden Ansprüche, **dadurch gekennzeichnet, dass** Komponenten mit geringer mechanischer Festigkeit und/oder sicherheitstechnisch hoch sensible Komponenten von einer vor mechanischen Einflüssen schützenden Struktur umgeben sind.

15. Arbeitsmaschine nach einem der vorherigen Ansprüche, **dadurch gekennzeichnet, dass** ein Sicherheitsmechanismus vorhanden ist, der ausgebildet ist, im Falle eines unkontrollierten Wasserstoffaustrittes durch eine oder mehrere beschädigte Komponenten sicherzustellen, dass das oder die Ventile des oder der Tanks (4) geschlossen werden.

## Claims

1. Work machine, in particular wheel loader, with a cab (2) for the operator of the work machine as well as with a machine compartment (6) arranged behind the cab (2), wherein the work machine has a drive that can be operated with hydrogen or with energy obtained from hydrogen and that one or more tanks (4) for receiving hydrogen are present, wherein the tank or tanks (4) are arranged between the cab (2) and the rear end of the work machine in a hydrogen fuel system, **characterized in that** a tank system comprising the container or containers has a fastening frame which is designed to deform under the action of a force, in particular in an accident.

2. Work machine according to claim 1, **characterized in that** the tank (4) is arranged immediately behind the cab (2).

3. Work machine according to claim 1 or 2, **characterized in that** the tank (4) is not arranged above the machine compartment (6).

4. Work machine according to one of the preceding claims, **characterized in that** the tank (4) is arranged between the cab (2) and the machine compartment (6) and/or that a recess is arranged behind the cab (2) in which the tank (4) is located.

5. Work machine according to one of the preceding claims, **characterized in that** the hydrogen fuel system is suitable for storing hydrogen in liquid and/or gaseous form and/or in bound form and/or that a structure protecting against mechanical influences is present which at least partially surrounds the hydrogen fuel system.

6. Work machine according to one of the preceding claims, **characterized in that** a cladding is present which at least partially surrounds the hydrogen fuel system and/or that no other component of the work machine is located above the hydrogen fuel system which can represent an ignition source.

7. Work machine according to one of the preceding claims, **characterized in that** the work machine has a fuel cell for generating electrical energy by means of hydrogen and/or has a hydrogen internal combustion engine.

8. Work machine according to one of the preceding claims, **characterized in that** the work machine does not have an internal combustion engine for diesel fuel or gasoline for driving the work machine or that the work machine, in addition to the drive that can be operated with hydrogen, has an internal combustion engine for diesel fuel or gasoline for driving the work machine.

9. Work machine according to one of the preceding claims, **characterized in that** the components of the hydrogen fuel system are not fixedly connected to the work machine, but are replaceable.

10. Work machine according to one of the preceding claims, **characterized in that** the hydrogen fuel system at least partially forms a pre-assembled module and/or that the hydrogen fuel system comprises or consists of one or more of the components tank (4) for receiving hydrogen or containing hydrogen, valve, piping.

11. Work machine according to one of the preceding claims, **characterized in that** a predetermined breaking point is present which is designed and arranged such that the tank (4) and/or a tank system comprising the container or containers, under the action of a force, in particular in an accident, at the predetermined breaking point releases from the work machine and in particular from its vehicle frame or moves relative thereto.

12. Work machine according to one of the preceding claims, **characterized in that** the work machine has a rear-side access.

13. Work machine according to one of the preceding claims, **characterized in that** the work machine has a base frame and that, in particular in the event of an accident, a part of the occurring forces is diverted to the base frame via the tank or tanks and/or via a tank system comprising the tank or tanks.

14. Work machine according to one of the preceding claims, **characterized in that** components with low mechanical strength and/or safety-technically highly sensitive components are surrounded by a structure that protects against mechanical influences.

15. Work machine according to one of the preceding claims, **characterized in that** a safety mechanism is present which is designed to ensure, in the event of an uncontrolled hydrogen escape due to one or more damaged components, that the valve or valves of the tank or tanks (4) are closed.

## Revendications

1. Machine de travail, notamment chargeuse sur pneus, comprenant une cabine (2) pour le conducteur de la machine de travail ainsi qu'un compartiment moteur (6) disposé derrière la cabine (2), la machine de travail étant dotée d'un entraînement pouvant être exploité à l'hydrogène ou au moyen d'une énergie obtenue à partir d'hydrogène, et un ou plusieurs réservoirs (4) destinés à contenir de l'hydrogène étant prévus, le ou les réservoirs (4) étant disposés entre la cabine (2) et l'arrière de la machine de travail dans un système d'alimentation en hydrogène, **caractérisée en ce qu'**un système de réservoirs comprenant le ou les récipients présente un cadre de fixation configuré pour se déformer sous l'effet d'une force, notamment en cas d'accident.

2. Machine de travail selon la revendication 1, **caractérisée en ce que** le réservoir (4) est disposé immédiatement derrière la cabine (2).

3. Machine de travail selon la revendication 1 ou 2, **caractérisée en ce que** le réservoir (4) n'est pas disposé au-dessus du compartiment moteur (6).

4. Machine de travail selon l'une quelconque des revendications précédentes, **caractérisée en ce que** le réservoir (4) est disposé entre la cabine (2) et le compartiment moteur (6) et/ou qu'un renfoncement est disposé derrière la cabine (2), dans lequel se trouve le réservoir (4).

5. Machine de travail selon l'une quelconque des revendications précédentes, **caractérisée en ce que** le système d'alimentation en hydrogène est apte à stocker l'hydrogène sous forme liquide et/ou gazeuse et/ou sous forme liée, et/ou qu'une structure protégeant contre les influences mécaniques est présente, laquelle entoure au moins partiellement le système d'alimentation en hydrogène.

6. Machine de travail selon l'une quelconque des revendications précédentes, **caractérisée en ce qu'**un habillage est présent, lequel entoure au moins partiellement le système d'alimentation en hydrogène, et/ou qu'aucun autre composant de la machine de travail susceptible de constituer une source d'inflammation ne se trouve au-dessus du système d'alimentation en hydrogène.

7. Machine de travail selon l'une quelconque des revendications précédentes, **caractérisée en ce que** la machine de travail comprend une pile à combustible pour produire de l'énergie électrique au moyen d'hydrogène et/ou un moteur à combustion à hydrogène.

8. Machine de travail selon l'une quelconque des revendications précédentes, **caractérisée en ce que** la machine de travail ne comporte aucun moteur à combustion pour carburant diesel ou essence destiné à l'entraînement de la machine de travail, ou que la machine de travail comprend, en plus de l'entraînement pouvant être exploité à l'hydrogène, un moteur à combustion pour carburant diesel ou essence destiné à l'entraînement de la machine de travail.

9. Machine de travail selon l'une quelconque des revendications précédentes, **caractérisée en ce que** les composants du système d'alimentation en hydrogène ne sont pas liés de manière fixe à la machine de travail, mais sont interchangeables.

10. Machine de travail selon l'une quelconque des revendications précédentes, **caractérisée en ce que** le système d'alimentation en hydrogène forme au moins partiellement un ensemble prémonté et/ou que le système d'alimentation en hydrogène comprend un ou plusieurs des composants suivants, à savoir réservoir (4) destiné à contenir de l'hydrogène ou contenant de l'hydrogène, vanne, tuyauterie, ou est constitué de ceux-ci.

11. Machine de travail selon l'une quelconque des revendications précédentes, **caractérisée en ce qu'**un point de rupture prédéterminé est prévu, lequel est conçu et disposé de telle sorte que le réservoir (4) et/ou un système de réservoirs comprenant le ou les récipients se détache de la machine de travail et notamment de son châssis de véhicule, ou se déplace par rapport à celui-ci, au niveau du point de rupture prédéterminé sous l'effet d'une force, notamment en cas d'accident.

12. Machine de travail selon l'une quelconque des revendications précédentes, **caractérisée en ce que** la machine de travail comporte un accès arrière.

13. Machine de travail selon l'une quelconque des revendications précédentes, **caractérisée en ce que** la machine de travail comporte un cadre de base et qu'en particulier en cas d'accident, une partie des forces apparaissant est transmise au cadre de base par l'intermédiaire du ou des réservoirs et/ou par l'intermédiaire d'un système de réservoirs comprenant le ou les réservoirs.

14. Machine de travail selon l'une quelconque des revendications précédentes, **caractérisée en ce que** des composants présentant une faible résistance mécanique et/ou des composants hautement sensibles du point de vue de la sécurité sont entourés d'une structure protégeant contre les influences mécaniques.

15. Machine de travail selon l'une quelconque des revendications précédentes, **caractérisée en ce qu'**un mécanisme de sécurité est prévu, lequel est conçu pour garantir, en cas de fuite incontrôlée d'hydrogène à travers un ou plusieurs composants endommagés, que la ou les vannes du ou des réservoirs (4) soient fermées.
